# EUROPÄISCHE PATENTSCHRIFT

(11) **EP 0 757 065 B1**
(45) Veröffentlichungstag und Bekanntmachung des Hinweises auf die Patenterteilung: **14.03.2001**
(21) Anmeldenummer: 96112175.3
(22) Anmeldetag: 27.07.1996
(51) Int. Cl.: C08F 210/02, C08F 218/08, C04B 26/04, C09K 3/10, C08F 263/04

(54) **Heterogene Vinylacetat/Ethylen-Dispersion**
Heterogeneous vinylacetate/ethylene dispersion
Dispersion hétérogène d'éthylène-acétate de vinyle

(30) Priorität: 02.08.1995 DE 19528380
(43) Veröffentlichungstag der Anmeldung: 05.02.1997
(73) Patentinhaber: Clariant GmbH, 65929 Frankfurt am Main (DE)
(72) Erfinder: Schmitz, Ludwig, Dr., 67227 Frankenthal (DE); Hess, Stefan, Dr., 64521 Gross-Gerau (DE); Gerharz, Bettina, Dr., 55252 Mainz-Kastel (DE)

(56) Entgegenhaltungen:
- EP-A- 0 444 827
- EP-A- 0 586 966
- DE-A- 2 055 978
- DE-A- 2 214 410
- DE-A- 2 459 707

## Beschreibung

Die Erfindung betrifft heterogen aufgebaute Vinylacetat/Ethylen-Copolymerisate in Dispersions- oder vorzugsweise redispergierbarer Pulverform, deren Herstellung und deren Verwendung als Bindemittel in Baustofformulierungen, insbesondere in Dichtschlämmen.

Copolymerisate werden seit vielen Jahren gerade im Bausektor als Kunststoffvergütung von hydraulich abbindenden Systemen, bevorzugt in Form von Dispersionspulvern, eingesetzt. Eine Übersicht über die Wirkung von Dispersionspulvern in solchen Baustoffen findet sich in der Zeitschrift Tonindustrie TIZ 9, 1985, S. 698. Wesentliche Verbesserungen in den Eigenschaften Haftung, Abriebbeständigkeit, Kratzfestigkeit und Biegezugfestigkeit werden durch den Zusatz von Dispersionspulvern erzielt.

Dispersionspulver werden durch Sprühtrocknung wäßriger Polymerdispersionen unter Zusatz von Polyvinylalkohol und anderer Additive hergestellt, wobei Produkte mit guter Lagerstabilität bevorzugt sind. Das gut rieselfähige Pulver mit Korngrößen zwischen 10 und 250 µm redispergiert in Wasser wieder zur ursprünglichen Dispersion mit Teilchengrößen zwischen 0,1 und 10 µm.

Der große Vorteil von Dispersionspulvern gegenüber den gleichfalls alternativ einsetzbaren flüssigen Dispersionen besteht darin, daß man Trockenmörtelmischungen herstellen kann, die an der Baustelle nur noch mit Wasser angemischt werden müssen. Diese Vorgehensweise bringt viele Vorteile wie erhöhte Arbeitssicherheit, sichere Handhabung oder einfache Gebindeentsorgung.

Redispergierbare Dispersionspulver auf Basis der Monomeren Vinylacetat und Ethylen besitzen den Vorteil, daß sich ohne Verwendung von Weichmachern oder Filmbildehilfsmitteln Polymerisate mit einer minimalen Filmbildetemperatur von etwa 0°C sowie einer Glasübergangstemperatur (Tg) von kleiner als 0 °C herstellen lassen.

Dispersionspulver mit tiefer Glasübergangstemperatur (Tg<-10 °C) besitzen darüberhinaus den Vorteil, daß sich der wenig elastische "anorganische Anteil" (Sand und Zement) der Baustofformulierung auch bei tiefer Anwendungs-Temperatur durch den Kunststoffanteil elastifizieren läßt, so daß sich die anwendungstechnischen Eigenschaften solcher Materialien deutlich verbessern lassen. Allerdings weisen Dispersionspulver mit tiefer Glasübergangstemperatur eine verstärkte Blockneigung auf, so daß die Herstellung lagerstabiler Produkte Probleme bereitet.

In DE-C 22 14 410 sind Vinylacetat/Ethylen-Copolymer-Dispersionspulver beansprucht, deren zugrundeliegende Dispersionen bei Ethylendrücken bis zu 100 bar synthetisiert wurden. Dabei wird bevorzugt ein Monomerzulaufverfahren angewendet, bei dem in Anwesenheit eines bestimmten Ethylendrucks Vinylacetat oder Gemische aus Vinylacetat und anderen olefinisch ungesättigten Monomeren zu einer wäßrigen Flotte zudosiert werden. Der Ethylendruck kann während der gesamten Zudosierzeit konstant gehalten werden, es kann jedoch auch bei steigendem oder fallendem Druck gearbeitet werden. Die in den Beispielen von DE-C 22 14 410 beschriebenen Vinylacetat/Ethylen-Copolymer-Dispersionspulver enthalten maximal 25 % Ethylen im Polymerisat.

In der Druckschrift EP-A 0 444 827 ist ein heterogenes Ethylen/Vinylacetat-Copolymerisat beschrieben, das 10 bis 30 Gew.-% Ethylen im Kernmaterial enthält, während der Ethylen-Gehalt im Schalenmaterial möglichst gering sein soll. Die gemäß EP-A 0 444 827 erhaltenen Polymerdispersionen sind zur Herstellung von Dispersionspulvern nicht geeignet.

Die Patentanmeldung EP-A 0 586 966 beschreibt ebenfalls ein heterogenes Ethylen/Vinylacetat-Copolymerisat, das in einem zweistufigen Polymerisationsverfahren erhalten wird. Die zweite Polymerisationsstufe wird in jedem Fall drucklos in Abwesenheit von Ethylen durchgeführt. Auch die nach EP-A 0 586 966 erhaltenen Copolymerisate lassen sich nicht in lagerstabile Dispersionspulver überführen.

Es bestand daher die Aufgabe, Copolymerisate für lagerstabile, redispergierbare und rieselfähige Dispersionspulver mit einer Glasübergangstemperatur von -40 bis 10 °C, die sich als Bindemittel in Baustofformulierungen verwenden lassen, zur Verfügung zu stellen.

Diese Aufgabe konnte gelöst werden durch ein Copolymerisat, enthaltend Vinylacetat, mindestens 30 Gew.-% Ethylen sowie gegebenenfalls weitere Monomere aus der Gruppe Vinylester, Acrylsäure, Acrylsäureester, Methacrylsäure, Methacrylsäureester, Maleinsäurediester, das in einem mehrstufigen Copolymerisationsverfahren in Gegenwart eines Schutzkolloids erhalten wird und das eine erste Ethylen-reiche Phase unter Einbau von Ethylen in einem Mengenanteil von mehr als 40 Gew.-% und eine letzte Ethylen-arme Phase enthält.

Gegenstand der vorliegenden Erfindung ist also ein Schutzkolloid-stabilisiertes Copolymerisat in Dispersions- oder vorzugsweise redispergierbarer Pulverform mit einer Glasübergangstemperatur von -40 bis 10 °C und einem Ethylen-Gehalt von mindestens 30 Gew.-%, bezogen auf die Gesamtmenge der Monomeren, mit heterogenem Aufbau der Copolymerpartikel, enthaltend eine erste vorzugsweise teilkristalline Copolymerisatphase, die Vinylacetat und > 40 Gew.-% Ethylen, bezogen auf die Gesamtmenge der Monomeren in dieser Phase, enthält und die vorzugsweise eine Glasübergangstemperatur von -40 bis 0 °C, insbesondere -30 bis -10 °C, und gegebenenfalls einem Schmelzbereich von 0 bis 80 °C aufweist, wenn separat polymerisiert, und eine letzte Copolymerisatphase, die Vinylacetat und 5 bis 40 Gew.-% Ethylen, bezogen auf die Gesamtmenge der Monomeren in dieser Phase, enthält und die vorzugsweise eine Glasübergangstemperatur von -10 bis 50 °C, insbesondere 10 bis 40 °C aufweist, wenn separat polymerisiert.

Vorzugsweise sind die erfindungsgemäßen Copolymerisate, jeweils bezogen auf die Gesamtmenge der eingesetzten Monomere, aufgebaut aus mindestens 50 Gew.-%, insbesondere mindestens 75 Gew.-%, Monomereinheiten von Vinylacetat und Ethylen sowie bis zu 50 Gew.-%, insbesondere bis zu 25 Gew.-%, Comonomeren aus der Gruppe Vinylester aliphatischer (C₃-C₁₈)-Carbonsäuren, Acrylsäureester, Methacrylsäureester und Maleinsäurediester aliphatischer (C₁-C₁₈)-Alkohole sowie Sulfonatgruppen-tragenden Monomeren, α,β-ungesättigten Carbonsäuren, Epoxy- oder Hydroxylgruppen tragenden Methacrylsäureestern oder Acrylsäureestern oder N-Methylolgruppen-tragenden Monomeren sowie weiteren damit copolymerisierbaren Monomeren.

Vorzugsweise enthalten die erfindungsgemäßen Copolymerisate 30 bis 70 Gew.-%, insbesondere 50 bis 65 Gew.-%, Vinylacetat und 30 bis 70 Gew.-%, insbesondere 35 bis 50 Gew.-%, Ethylen, bezogen auf die Gesamtmenge der eingesetzten Monomeren.

Geeignete Vinylester sind vorzugsweise Vinylester von aliphatischen Monocarbonsäuren mit 3 bis 12 Kohlenstoffatomen, beispielsweise Vinylpropionat, Vinylbutyrat, Vinylcaproat, Vinyllaurat, Vinyldecanoat und Vinylester der ®Versaticsäure (α,α-Dialkyl-verzweigte Monocarbonsäure, Shell-Chemie), beispielsweise ®Veova 10 und Veova 11. Der Anteil dieser Comonomere beträgt vorzugsweise 0 bis 30 Gew.-%, insbesondere 5 bis 25 Gew.-%, bezogen auf die Gesamtmenge der eingesetzten Monomeren.

Geeignete Acrylate und Methacrylate sind vorzugsweise Acrylsäureester von einwertigen Alkoholen mit 1 bis 12 Kohlenstoffatomen, beispielsweise Methylacrylat, Ethylacrylat, Butylacrylat, 2-Ethylhexylacrylat, sowie Methacrylsäureester von einwertigen Alkoholen mit 1 bis 12 Kohlenstoffatomen, beispielsweise Methylmethacrylat, Ethylmethacrylat, Butylmethacrylat und 2-Ethylhexylmethacrylat. Geeignete Maleinsäurediester sind vorzugsweise Ester von einwertigen aliphatischen Alkoholen mit 1 bis 12 Kohlenstoffatomen, beispielsweise Dibutylmaleinat, Dihexylmaleinat und Dioctylmaleinat. Die Alkoholreste der Acryl-, Methacrylsäureester und Maleinsäurediester können aus linearen oder verzweigten Alkylketten bestehen. Der Anteil dieser Comonomere beträgt 0 bis 30 Gew.-%, vorzugsweise 5 bis 25 Gew.-%.

Als α,β-ungesättigte Carbonsäuren enthalten die erfindungsgemäßen Copolymerisate 0 bis 1 Gew.-%, vorzugsweise 0,1 bis 0,5 Gew.-%, bezogen auf die Gesamtmenge der eingesetzten Monomeren, Acrylsäure und/oder Methacrylsäure.

Die in den erfindungsgemäßen Copolymerisaten optional enthaltenen Methacrylbzw. Acrylsäureester, die mit Epoxidgruppen oder Hydroxylgruppen modifiziert sind, sind vorzugsweise Glycidylmethacrylat, Hydroxyethylmethacrylat, Hydroxyethylacrylat, Hydroxypropylacrylat, Hydroxypropylmethacrylat, N-Methylolacrylamid. Der Anteil dieser Comonomere beträgt 0 bis 1 Gew.-%, vorzugsweise 0,05 bis 0,5 Gew.-%, bezogen auf die Gesamtmenge der eingesetzten Monomeren.

Die erfindungsgemäßen Copolymerisate können neben den aufgeführten Monomereinheiten außerdem olefinisch ungesättigte Verbindungen wie (C₃-C₁₂)-α-Olefine, beispielsweise Propylen, Isobutylen, Vinylether, beispielsweise Vinylethylether, Vinyl-n-butylether, sowie Acrylnitril, Methacrylnitril, Vinylchlorid, N-Vinylpyrrolidon, in einer Menge von 0 bis 10 Gew.-%, vorzugsweise 1 bis 5 Gew.-%, bezogen auf die Gesamtmenge der eingesetzten Monomeren, enthalten.

Des weiteren können Monomereinheiten, die Silizium enthalten, beispielsweise Vinyltrimethoxysilan, Vinyltriethoxysilan, in einer Menge 0 bis 2 Gew.-%, vorzugsweise 0,05 bis 0,5 Gew.-%, insbesondere 0,1 bis 0,25 Gew.-%, bezogen auf die Gesamtmenge der eingesetzten Monomeren, in den Dispersionspolymeren enthalten sein.

Das erfindungsgemäße Copolymerisat kann auch einen breiten Einfrierbereich sowie eine zweite Glasübergangstemperatur oder einen Schmelzbereich aufweisen, solange eine minimale Filmbildetemperatur vorzugsweise <5 °C, insbesondere von <0 °C erreicht wird.

Die erfindungsgemäßen Copolymerisate werden durch Schutzkolloide stabilisiert. In Frage kommen übliche Schutzkolloide, beispielsweise Celluloseether, wasserlösliche Stärke, Polyvinylpyrrolidon und Polycarbonsäuren, vorzugsweise ein oder mehrere Polyvinylalkohole, die insbesondere einen Hydrolysegrad von 60 bis 100 Mol-% und eine Viskosität der 4 Gew.-%igen wäßrigen Lösung von 2 bis 70 mPa·s, gemessen bei 20 °C , aufweisen. Die Polyvinylalkohole können auch funktionalisiert sein insbesondere durch Sulfonsäuregruppen, Carbonsäuregruppen, Acetalgruppen und/oder Aminogruppen. Der Mengenanteil der Schutzkolloide, bezogen auf die Gesamtmenge des Copolymerisats beträgt vorzugsweise 2 bis 20 Gew.-%, insbesondere 5 bis 15 Gew.-%.

Weiterhin können übliche anionische, nichtionische oder kationische Emulgatoren als Costabilisatoren mitverwendet werden, wobei die Emulgatoren im allgemeinen vor der Polymerisation vorgelegt werden. Deren Mengenanteil kann bis zu 3 Gew.-%, vorzugsweise 0,5 bis 3 Gew.-%, betragen, bezogen auf die Gesamtmasse der Copolymerzusammensetzung.

Die Teilchengröße der Polymerpartikel der erfindungsgemäßen Copolymerisate liegt in der Dispersionsform im Bereich von 0,02 bis 10 µm, vorzugsweise im Bereich von 0,1 bis 5 µm. Der Feststoff-Gehalt der Dispersionen beträgt 40 bis 65 Gew.-%, vorzugsweise 45 bis 60 Gew.-%.

Gegenstand der vorliegenden Erfindung ist auch ein Verfahren zur Herstellung der erfindungsgemäßen Copolymerisate durch Polymerisation von Vinylacetat und Ethylen sowie gegebenenfalls Comonomeren aus der Gruppe Vinylester aliphatischer (C₃-C₁₈)-Carbonsäuren, Acrylsäureester, Methacrylsäureester und Maleinsäurediester aliphatischer (C₁-C₁₈)-Alkohole, Sulfonatgruppen tragenden Monomeren, α,β-ungesättigten Carbonsäuren, Epoxy- oder Hydroxylgruppen-tragenden Methacrylsäureestern oder Acrylsäureestern oder N-Methylolgruppen tragenden Monomeren, dadurch gekennzeichnet, daß in Gegenwart eines Schutzkolloids zunächst ein Teil der Monomeren unter einem Ethylendruck von 55 bis 150 bar radikalisch copolymerisiert wird, gegebenenfalls anschließend ein weiterer Teil der Monomeren polymerisiert wird und abschließend der Rest der Monomeren unter einem Ethylendruck zwischen 1 und 55 bar radikalisch copolymerisiert wird und gegebenenfalls anschließend sprühgetrocknet wird. Die optionalen Comonomeren können jederzeit während der Polymerisation zugesetzt werden und in die verschiedenen Polymerphasen eingebaut werden.

Die Dispersionsherstellung findet vorzugsweise in einem Druckautoklaven statt. Dazu werden zu der im Reaktionsgefäß ganz oder teilweise vorgelegten wäßrigen Lösung des Schutzkolloids oder des Schutzkolloid/Emulgator-Gemisches die Monomere bei der gewünschten Reaktionstemperatur kontinuierlich oder diskontinuierlich zugesetzt.

Als Radikalinitiator für die Polymerisation der Comonomeren können alle radikalbildenden Polymerisationsinitiatoren in den üblichen Mengen eingesetzt werden. Geeignete Initiatioren sind beispielsweise Alkali- und Ammoniumsalze der Peroxysäuren, wie Kalium-, Natrium- und Ammoniumpersulfat, sowie Redoxkatalysatoren, beispielsweise Kombinationen aus Ammoniumpersulfat und Ammoniumhydrogensulfat oder Wasserstoffperoxid und Ascorbinsäure oder Wasserstoffperoxid und Eisen-(II)-Salzen, sowie tert.-Butylhydroperoxid und Natrium-Formaldehyd-Sulfoxylat. Weiterhin können auch organische Peroxide, Percarbonate und Azoverbindungen eingesetzt werden, vorzugsweise Dibenzoylperoxid, Azoisobutyronitril, tert. Butylperoxydiethylacetat und tert.-Butylperoxy-2-ethylhexanoat. Die Menge der eingesetzten Initiatoren liegt bei 0,1 bis 2 Gew.-%, vorzugsweise 0,2 bis 1 Gew.-%, bezogen auf die Monomeren. Die aufgeführten Initiatoren können auch in Mischung verwendet werden.

Die Dosierung der Monomeren mit Ausnahme von Ethylen kann in Form einer Monomermischung oder in Form einer Monomeremulsion erfolgen. Im Falle einer Monomeremulsion können diese Schutzkolloid- und/oder Emulgator-stabilisiert sein. Als Emulgatoren werden vorzugsweise anionische oder nicht ionische Emulgatoren eingesetzt. Die aufgeführten Initiatorsysteme können bei der Dispersionsherstellung ganz oder teilweise im Reaktionsautoklaven vorgelegt oder teilweise mit der Monomeremulsion oder als Lösung zudosiert werden. Die Monomeren können kontinuierlich oder diskontinuierlich, also im Dosier-, im Batch- oder auch in einem kombinierten Batch-Dosier-Verfahren polymerisiert werden. Vorzugsweise werden bis zu 50 Gew.-%, insbesondere bis zu 20 Gew.-%, besonders bevorzugt 5 bis 20 Gew.-%, der Monomere mit Ausnahme von Ethylen vorgelegt und der Rest während der Polymerisation kontinuierlich oder diskontinuierlich zudosiert.

Die Ethylen-Dosierung erfolgt gasförmig, vorzugsweise bei einer Reaktionstemperatur von 45 bis 90 °C, insbesondere 50 bis 85 °C, und für den ersten Teil der Copolymerisation vorzugsweise unter einem Ethylendruck im Bereich von 60 bis 120 bar, insbesondere 65 bis 95 bar, und für den letzten Teil der Dispersionspolymerisation vorzugsweise im Bereich von 1 bis 40 bar, insbesondere während 90 % der Reaktionszeit im Bereich von 5 bis 40 bar. Dazu wird insbesondere die Ethylen-Zufuhr gegen Ende der ersten Polymerisationsstufe gestoppt, so daß sich der in der letzten Polymerisationsstufe angestrebte Ethylendruck im Verlauf der Polymerisation einstellt. Der Ethylendruck kann während der heterogenen Mehrstufenpolymerisation in der jeweiligen Stufe konstant gehalten oder innerhalb des jeweiligen Druckbereichs variiert werden.

Durch die mehrstufige Polymerisation, die zu Dispersionspartikeln mit einer Ethylen-reichen Phase und einer Ethylen-armen Phase führt, kann eine Dispersion hergestellt werden, die trotz des sehr tiefen Glasübergangsbereichs des Polymerisats durch den gezielt heterogenen Aufbau der Latexpartikel zu einem hochflexiblen Dispersionspulver mit sehr guter Lagerstabilität und guter Rieselfähigkeit versprüht werden kann. Dieses Eigenschaftsprofil ergibt sich infolge der hohen Flexibilität der weichen Ethylen-reichen Phase mit einem weitreichenden Gradienten des Glasübergangsbereiches in Verbindung mit der harten Ethylenarmen Phase. Dieses Eigenschaftsbild ist überraschenderweise nahezu unabhängig von dem Molekulargewicht des resultierenden Copolymerisats.

Die erfindungsgemäßen Copolymerisate können vorzugsweise in Dispersionsform nach gängigen Verfahren konserviert werden, um sie vor dem Befall durch Pilze und Bakterien zu schützen. Zur Konservierung werden nur sehr geringe Mengen an bioziden Zusatzstoffen verwendet. Andererseits kann durch Erhitzen des fertigen Mittels während 15 bis 120 Minuten auf Temperaturen von 60 bis 120 °C eine Konservierung erreicht werden, beispielsweise durch Pasteurisieren oder Tyndallisieren (fraktionierte Sterilisation), ferner durch Kühlen, sowie durch Ausschluß von Luft bei der Lagerung in gasdichten Gebinden unter Inertgas. Auch Ultraschall, UV-Bestrahlung und Hochfrequenzfelder können zur Konservierung verwendet werden. Weiterhin sind Zusätze minimaler Mengen von Antibiotika, beispielsweise Terramycin, Streptomycin und Subtilin geeignet, ebenso Chinosol (äquimolare Verbindung aus o-Oxychinolinsulfat und Kaliumsulfat). Als Konservierungsmittel können ferner Chloracetamid, Natriumbenzoat, Methyl-, Ethyl- und Propylester der p-Hydroxybenzoesäure und deren Natriumverbindungen, Natriumsorbat, Natriumformiat, Natriumborat sowie Borax, Wasserstoffperoxid, Milchsäure, Ameisensäure, Propionsäure, Nitrite und Nitrate, Salicylsäure, Dehydracetsäure, Thymol (Methylisopropylphenol), Bariummetaborat, Dithiocarbaminate, Chlormethylisothiazolinon und Benzisothiazolinon in wirksamen Mengen eingesetzt werden.

Gegenstand der vorliegenden Erfindung ist auch die Verwendung der erfindungsgemäßen Copolymersiate, vorzugsweise in Form von Dispersionspulver, als Bindemittel in Baustoffen, vorzugsweise Dichtschlämmen.

Die erfindungsgemäßen Copolymerisate erfüllen die Eigenschaften eines hochflexiblen, damit tieftemperaturbeständigen Bindemittels in Dichtschlämmen bis -30° C, vorzugsweise bis -25° C, bei Einsatz sowohl aus der Ausgangsdispersion als auch aus der Reemulsion der daraus hergestellten Pulver. Sie sind extrem stabil gegenüber möglichen Zusatzstoffen, beispielsweise Quarzsand, Gips, Kreiden, Metallsalzen und Weichmachern. Die Dichtschlämmen enthalten vorzugsweise zwischen 5 und 40 %, insbesondere 10 bis 25 %, des Copolymerisats als Bindemittel.

Die erfindungsgemäßen Copolymerisate können nachträglich weiter modifiziert werden. Dazu können beispielsweise wasserlösliche Copolymerisate auf Basis von Acryl- bzw. Methacrylsäure, wie Acrylsäure/Acrylamid- und Methacrylsäure/Acrylsäureester-Copolymerisate, beispielsweise auch wasserlösliche Copolymerisate auf Basis von Styrol/Maleinsäureanhydrid, Ethylen/Maleinsäureanhydrid, Ethylen/Acrylsäure, Ethylen/Methacrylsäure, Cellulosederivate, wie Methylcellulose, Hydroxyethylcellulose und Carboxymethylcellulose oder Casein, Gummiarabicum, Tragantgummi, Stärke, Natriumalginat, Polyvinylalkohol, Polyvinylpyrrolidon oder Natriumpolyacrylat zugesetzt werden.

### Beispiele

Die in den nachfolgenden Beispielen verwendeten Teile und Prozente beziehen sich auf das Gewicht, soweit nicht anders vermerkt.

Die Beispiele und Vergleichsbeispiele werden in einem 30 l-Druckautoklaven mit Mantelkühlung und zugelassenem Druckbereich bis 160 bar ausgeführt.

Die Viskosität der Dispersionen wurde ermittelt mit einem Haake-Rotationsviskosimeter (Rheomat® VT 500) bei einem Schergefälle von D = 17,93s⁻¹.

Die Teilchengröße und die Teilchengrößenverteilung wurden durch Laser- und Weißlichtaerosolspektroskopie bestimmt. Die angegebenen Teilchengrößen entsprechen dem Teilchendurchmesser nach Trocknung.

Die Bestimmung der Glasübergangstemperaturen erfolgt durch DSC-Messung auf einer Perkin-Elmer 7 mit einer Aufheizrate von 20K/min.

Die Angaben zum Ethylen-Gehalt beziehen sich auf den relativen Gewichtsanteil Ethylen an den Monomereinheiten im Copolymerisat. Der Ethylen-Anteil in den Copolymeren ist aus dem Feststoffgewicht des Copolymerisats abzüglich der Mengen aller Einsatzstoffe außer Ethylen errechnet.

### Beispiel 1

In einem 30 I-Druckreaktionsgefäß mit Temperaturregeleinrichtung und Rührwerk wird die mit Essigsäure auf den pH-Wert von 5,0 eingestellte Lösung aus 500 g Polyvinylalkohol mit einer Viskosität der 4 %igen wäßrigen Lösung bei 20 °C von ca. 18 mPa·s und einem Verseifungsgrad von ca. 88 Mol-%, 1000 g Polyvinylalkohol mit einer Viskosität der 4 %igen wäßrigen Lösung bei 20 °C von ca. 8 mPa·s und einem Verseifungsgrad von ca. 88 Mol-%, 50,8g wasserfreiem Natriumacetat, 12,7 g Natriumdisulfit und 8800 g Wasser gebracht.
Der Reaktor wird mit Stickstoff und Ethylen gespült, um weitgehend allen Sauerstoff zu entfernen. Anschließend wird das Rührwerk auf 150 U/min. eingestellt, dem Ansatz 640 ml Vinylacetat zugegeben, der Kesselinhalt auf 40 °C erwärmt, bei 40 °C werden 25 % einer Lösung von 50 g Ammoniumpersulfat in 1000 g Wasser zugeben und der Kesselinhalt auf 60 °C erwärmt. Während des Aufheizvorgangs wird Ethylen bis zu einem Druck von 85 bar zugegeben.
Beim Erreichen von 60 °C Innentemperatur wird mit der sechsstündigen Dosierung von 3640 ml Vinylacetat parallel zur Initiator-Lösung bei einer Innentemperatur von 60 °C und einem Ethylendruck von 85 bar begonnen. Weitere 65 % der Ammoniumpersulfat-Lösung werden über 8 h linear zudosiert, danach werden die verbleibenden 10 % auf einmal zugegeben. Nach Beendigung des Vinylacetat I-Zulaufs nach 6 h wird die Ethylen-Zufuhr gestoppt und es werden über einen Zeitraum von 2 h weitere 2000 ml Vinylacetat II linear zudosiert. Nach beendeter Zudosierung wird eine Stunde bei 60 °C nachreagieren lassen, dann wird der Ansatz über 60 Minuten auf 80 °C aufgeheizt und nach beendeter Reaktion nach einer weiteren Stunde abgekühlt.
Charakteristische Daten:
Feststoff: 44,0 %
pH-Wert: 4,5
Viskosität: 16,7 Pa·s
Teilchengrößenverteilung: 100 - 2500 nm
Ethylen-Gehalt: 33,4%
Glaspunkte: -25/14 °C

### Beispiel 2

In einem 30 I-Druckreaktionsgefäß mit Temperaturregeleinrichtung und Rührwerk wird die mit Essigsäure auf den pH-Wert von 5,0 eingestellte Lösung aus 500 g Polyvinylalkohol mit einer Viskosität der 4 %igen wäßrigen Lösung bei 20 °C von ca. 18 mPa·s und einem Verseifungsgrad von ca. 88 Mol-%, 1000 g Polyvinylalmit einer Viskosität der 4 %igen wäßrigen Lösung bei 20 °C von ca. 8 mPa·s und einem Verseifungsgrad von ca. 88 Mol-%, 50,8 g wasserfreiem Natriumacetat, 12,7 g Natriumdisulfit und 8800 g Wasser gebracht.
Der Reaktor wird mit Stickstoff und Ethylen gespült, um weitgehend allen Sauerstoff zu entfernen. Anschließend wird das Rührwerk auf 150 U/min. eingestellt, dem Ansatz 640 ml Vinylacetat zugegeben, der Kesselinhalt auf 40 °C erwärmt, bei 40 °C werden 25 % einer Lösung von 50 g Ammoniumpersulfat in 1000 g Wasser zugeben und der Kesselinhalt auf 60 °C erwärmt. Während des Aufheizvorgangs wird Ethylen bis zu einem Druck von 85 bar zugegeben.
Beim Erreichen von 60 °C Innentemperatur wird mit der sechsstündigen Dosierung von 3640 ml Vinylacetat parallel zur Initiator-Lösung bei einer Innentemperatur von 60 °C und einem Ethylendruck von 85 bar begonnen. Weitere 65 % der Ammoniumpersulfat-Lösung werden über 9 h linear zudosiert, die restlichen 10 % werden nach Ende der Monomer-Dosierung auf einmal zugegeben. Nach Beendigung des Vinylacetat I-Zulaufs nach 6 h wird die Ethylen-Zufuhr gestoppt und es werden über einen Zeitraum von 3 h weitere 2000 ml Vinylacetat II und III wie folgt zugegeben:

Das Vinylacetat II (1000 ml) wird linear über 2 h zudosiert und Vinylacetat III (1000 ml) in einer Stunde linear zudosiert. Nach beendeter Zudosierung wird eine Stunde bei 60 °C nachreagieren lassen, dann wird der Ansatz über 60 Minuten auf 85 °C aufgeheizt und nach beendeter Reaktion nach einer weiteren Stunde abgekühlt. Der Ethylen-Enddruck beträgt 39,0 bar.
Charakteristische Daten:
Feststoff: 46 %
pH-Wert: 4,3
Viskosität: 16,2 Pa·s
Teilchengrößenverteilung: 100 - 3000 nm
Ethylen-Gehalt: 39,8 %
Glaspunkte: -26 /20°C

### Beispiel 3

In einem 30l-Druckreaktionsgefäß mit Temperaturregeleinrichtung und Rührwerk wird die mit Essigsäure auf den pH-Wert von 5,0 eingestellte Lösung aus 500 g Polyvinylalkohol mit einer Viskosität der 4 %igen wäßrigen Lösung bei 20 °C von ca 18 mPa·s und einem Verseifungsgrad von ca. 88 Mol-%, 1000 g Polyvinylalkohol mit einer Viskosität der 4 %igen wäßrigen Lösung bei 20 °C von ca. 8 mPa·s und einem Verseifungsgrad von ca. 88 Mol-%, 50,8 g wasserfreiem Natriumacetat, 12,7 g Natriumdisulfit und 8800 g Wasser gebracht. Zusätzlich wird in die Vorlage ein Emulgator ®Pluronic L60 (EO/PO-Blockpolymerisat, BASF) (152,8 g) eingebracht.
Der Reaktor wird mit Stickstoff und Ethylen gespült, um weitgehend allen Sauerstoff zu entfernen. Anschließend wird das Rührwerk auf 150 U/min. eingestellt, dem Ansatz 640 ml Vinylacetat zugegeben, der Kesselinhalt auf 40 °C erwärmt, bei 40 °C werden 25 % einer Lösung von 50 g Ammoniumpersulfat in 1000 g Wasser zugeben und der Kesselinhalt auf 60 °C erwärmt. Während des Aufheizvorgangs wird Ethylen bis zu einem Druck von 85 bar zugegeben.
Beim Erreichen von 60 °C Innentemperatur wird mit der sechsstündigen Dosierung von 3640 ml Vinylacetat parallel zur Initiator-Lösung bei einer Innentemperatur von 60 °C und einem Ethylendruck von 85 bar begonnen. Weitere 65 % der Ammoniumpersulat-Lösung werden über 8 h linear zudosiert, die verbleibenden 10 % nach Ende der Monomer-Dosierung auf einmal zugegeben. Nach Beendigung des Vinylacetat I-Zulaufs nach 6 h wird die Ethylen-Zufuhr gestoppt und es werden über einen Zeitraum von 3 h weitere 2000 ml Vinylacetat II und III wie folgt zugegeben:
Das Vinylacetat II (1000 ml) wird linear über 2 h zudosiert und Vinylacetat III (1000 ml) in einer Stunde linear zudosiert. Nach beendeter Zudosierung wird eine Stunde bei 60 °C nachreagieren lassen, dann wird der Ansatz über 60 Minuten auf 85 °C aufgeheizt und nach beendeter Reaktion nach einer weiteren Stunde abgekühlt. Der Ethylen-Enddruck beträgt 35,0 bar.
Charakteristische Daten:
Feststoff: 45 %
pH-Wert: 4,1
Viskosität: 8,8 Pa·s
Teilchengrößenverteilung: 100 - 2300 nm
Ethylen-Gehalt: 34,4 %
Glaspunkte: -25 /0°C

### Beispiel 4

In einem 30 I-Druckreaktionsgefäß mit Temperaturregeleinrichtung und Rührwerk wird die mit Essigsäure auf den pH-Wert von 5,0 eingestellte Lösung aus 500 g Polyvinylalkohol mit einer Viskosität der 4 %igen wäßrigen Lösung bei 20 °C von ca. 18 mPa·s und einem Verseifungsgrad von ca. 88 Mol-%, 1000 g Polyvinylalkohol mit einer Viskosität der 4 %igen wäßrigen Lösung bei 20 °C von ca. 8 mPa·s und einem Verseifungsgrad von ca. 88 Mol-%, 50,8 g wasserfreiem Natriumacetat, 12,7 g Natriumdisulfit und 8800 g Wasser gebracht. Zusätzlich wird in die Vorlage ein Emulgator ®Texapon K12 (n-Dodecylsulfat, Henkel) (21 g) eingebracht.
Der Reaktor wird mit Stickstoff und Ethylen gespült, um weitgehend allen Sauerstoff zu entfernen. Anschließend wird das Rührwerk auf 150 U/min. eingestellt, dem Ansatz 640 ml Vinylacetat zugegeben, der Kesselinhalt auf 40 °C erwärmt, bei 40 °C werden 25 % einer Lösung von 50 g Ammoniumpersulfat in 1000 g Wasser zugeben und der Kesselinhalt auf 60 °C erwärmt. Während des Aufheizvorgangs wird Ethylen bis zu einem Druck von 85 bar zugegeben.
Beim Erreichen von 60 °C Innentemperatur wird mit der sechsstündigen Dosierung von 3640 ml Vinylacetat parallel zur Initiator-Lösung bei einer Innentemperatur von 60 °C und einem Ethylendruck von 85 bar begonnen. Weitere 65 % der Ammoniumpersulat-Lösung werden über 9 h linear zudosiert. Die verbleibenden 10 % werden nach Ende der Monomer-Dosierung auf einmal zugegeben. Nach Beendigung des Vinylacetat I Zulaufs nach 6 h wird die Ethylen-Zufuhr gestoppt und es werden über einen Zeitraum von 3 h weitere 2000 ml Vinylacetat II und III wie folgt zugegeben:
Das Vinylacetat II (1000 ml) wird linear über 2 h zudosiert und Vinylacetat III (1000 ml) in einer Stunde linear zudosiert. Nach beendeter Zudosierung wird eine Stunde bei 60 °C nachreagieren lassen, dann wird der Ansatz über 60 Minuten auf 85 °C aufgeheizt und nach beendeter Reaktion nach einer weiteren Stunde abgekühlt. Der Ethylen-Enddruck beträgt 32,8 bar.
Charakteristische Daten:
Feststoff: 47 %
pH-Wert: 4,2
Viskosität: 14,1 Pa·s
Teilchengrößenverteilung: 100 - 3000 nm
Ethylen-Gehalt: 36,3 %
Glaspunkte: -27 /10°C

### Beispiel 5

In einem 30 l-Druckreaktionsgefäß mit Temperaturregeleinrichtung und Rührwerk wird die mit Essigsäure auf den pH-Wert von 5,0 eingestellte Lösung aus 500 g Polyvinylalkohol mit einer Viskosität der 4 %igen wäßrigen Lösung bei 20 °C von ca. 18 mPa·s und einem Verseifungsgrad von ca. 88 Mol-%, 1000 g Polyvinylalkohol mit einer Viskosität der 4 %igen wäßrigen Lösung bei 20 °C von ca. 8 mPa·s und einem Verseifungsgrad von ca. 88 Mol-%, 50,8 g wasserfreiem Natriumacetat, 12,7 g Natriumdisulfit und 8800 g Wasser gebracht. Zusätzlich werden in die Vorlage ein Emulgator ®Arkopal N 300 (Nonylphenolethoxilat mit 30 EO-Einheiten, Hoechst) als 20 %ige Lösung zu 380 g, sowie 4,3 g Texapon K12 eingebracht.

Der Reaktor wird mit Stickstoff und Ethylen gespült, um weitgehend allen Sauerstoff zu entfernen. Anschließend wird das Rührwerk auf 150 U/min. eingestellt, dem Ansatz 640 ml Vinylacetat zugegeben, der Kesselinhalt auf 40 °C erwärmt, bei 40 °C werden 25 % einer Lösung von 50 g Ammoniumpersulat in 1000 g Wasser zugeben und der Kesselinhalt auf 60 °C erwärmt. Während des Aufheizvorgangs wird Ethylen bis zu einem Druck von 85 bar zugegeben.

Beim Erreichen von 60 °C Innentemperatur wird mit der sechsstündigen Dosierung von 3640 ml Vinylacetat parallel zur Initiator-Lösung bei einer Innentemperatur von 60 °C und einem Ethylendruck von 85 bar begonnen. Weitere 65 % der Ammoniumpersulat-Lösung werden über 9 h linear zudosiert. Die verbleibenden 10 % werden nach Ende der Monomer-Dosierung auf einmal zugegeben. Nach Beendigung des Vinylacetat I-Zulaufs nach 6 h wird die Ethylen-Zufuhr gestoppt und es werden über einen Zeitraum von 3 h weitere 2000 ml Vinylacetat II und III wie folgt zugegeben:

Das Vinylacetat II (1000 ml) wird linear über 2 h zudosiert und Vinylacetat III (1000 ml) in einer Stunde linear zudosiert. Nach beendeter Zudosierung wird eine Stunde bei 60 °C nachreagieren lassen, dann wird der Ansatz über 60 Minuten auf 85 °C aufgeheizt und nach beendeter Reaktion nach einer weiteren Stunde abgekühlt. Der Ethylen-Enddruck beträgt 16 bar.
Charakteristische Daten:
Feststoff: 44 %
pH-Wert: 4,3
Viskosität: 10,2 Pa·s
Teilchengrößenverteilung: 100 - 2200 nm
Ethylen-Gehalt: 30,1 %
Glaspunkte: -25/12°C

### Beispiel 6

In einem 30 I-Druckreaktionsgefäß mit Temperaturregeleinrichtung und Rührwerk werden 10800 g Wasser, 764 g Polyvinylalkohol mit einer Viskosität einer entsprechenden 4 %igen wäßrigen Lösung bei 20 °C von ca. 18 mPa·s und einem Verseifungsgrad von ca. 88 Mol-%, 764 g Polyvinylalkohol mit einer Viskosität einer entsprechenden 4 %igen wäßrigen Lösung bei 20 °C von ca. 8 mPa·s und einem Verseifungsgrad von ca. 88 Mol-%, 4,3 g Texapon K12, 380 g einer wäßrigen 20 %igen Lösung von Arkopal N300, 12,5 g Natriumdisulfit und 50,8 g Natriumacetat vorgelegt. Der Reaktor wird mit Stickstoff und Ethylen gespült, um den Sauerstoff weitgehend zu entfernen. Anschließend wird das Rührwerk auf 150 U/min eingestellt. Man dosiert 640 ml Vinylacetat zu und erwärmt den Kesselinhalt auf 40 °C. Bei dieser Temperatur werden schnell 250 ml der Initiator-Lösung aus 50 g Ammoniumperoxodisulfat und 1000 g Wasser zugegeben und dann die Temperatur auf 60 °C erhöht. Während der Aufheizphase wird Ethylen bis zu einem Druck von 85 bar aufgedrückt. Innerhalb von 8 h dosiert man 4000 ml Vinylacetat linear zu. Dabei wird nach 6h Polymerisationszeit die Ethylen-Zufuhr gestoppt. Nach Ende der 8-stündigen Polymerisationsphase werden innerhalb einer Stunde weitere 1000 ml Vinylacetat linear zudosiert. Über den gesamten Zeitraum von 9 h werden parallel zur Vinylacetat-Zugabe 600 ml Initiator-Lösung linear zudosiert. Nach dem Dosierende werden die verbleibenden 150 ml Initiator-Lösung schnell zudosiert und innerhalb von 1,5 h die Manteltemperatur auf 85 °C erhöht. Bei dieser Temperatur wird eine weitere Stunde gerührt, dann der Ansatz abgekühlt und abgelassen. Der Ethylen-Enddruck beträgt 14,5 bar.
Charakteristische Daten:
Feststoffgehalt: 44,7 %
pH-Wert: 4,34
Viskosität: 5,86 Pa·s
Teilchengrößenverteilung: 100 - 2200 nm
Ethylen-Gehalt: 35 %
Glaspunkte: -26°C/11 °C

### Beispiel 7

In einem 30 I-Druckreaktionsgefäß mit Temperaturregeleinrichtung und Rührwerk werden 10800 g Wasser, 764 g Polyvinylalkohol mit einer Viskosität einer entsprechenden 4 %igen wäßrigen Lösung bei 20 °C von ca. 18 mPa·s und einem Verseifungsgrad von ca. 88 Mol-%, 764 g Polyvinylalkohol mit einer Viskosität einer entsprechenden 4 %igen wäßrigen Lösung bei 20 °C von ca. 8 mPa·s und einem Verseifungsgrad von ca. 88 Mol-%, 4,3 g Texapon K12, 380 g einer wäßrigen 20 %igen Lösung von Arkopal N300, 12,5 g Natriumdisulfit und 50,8 g Natriumacetat vorgelegt. Der Reaktor wird mit Stickstoff und Ethylen gespült, um den Sauerstoff weitgehend zu entfernen. Anschließend wird das Rührwerk auf 150 U/min eingestellt. Man dosiert 650 ml Vinylacetat zu und erwärmt den Kesselinhalt auf 40 °C. Bei dieser Temperatur werden schnell 250 ml der Initiator-Lösung aus 50 g Ammoniumperoxodisulfat und 1000 g Wasser zugegeben und dann die Temperatur auf 60 °C erhöht. Während der Aufheizphase wird Ethylen bis zu einem Druck von 85 bar aufgedrückt. Innerhalb von 6 h dosiert man eine Monomermischung I bestehend aus 2600 ml Vinylacetat und 1900 ml VeoVa10 linear zu. Dabei wird nach Ende der 6-stündigen Polymerisationszeit die Ethylen-Zufuhr gestoppt. Nach Ende der 6-stündigen Polymerisationsphase werden innerhalb von zwei Stunden 50 % einer Monomermischung II, bestehend aus 1860 g Vinylacetat, 20 g Trimethoxyvinylsilan und 4 g 2-Hydroxyethylmethacrylat, linear zudosiert. Die restlichen 50 % der Monomermischung II werden dann innerhalb einer weiteren Stunde zudosiert. Über den gesamten Zeitraum von 9 h werden parallel zur Monomer-Zugabe 600 ml Initiator-Lösung linear zudosiert. Nach dem Dosierende werden die verbleibenden 150 ml Initiator-Lösung schnell zudosiert und innerhalb von 1,5 h die Manteltemperatur auf 85 °C erhöht. Bei dieser Temperatur wird eine weitere Stunde gerührt, dann der Ansatz abgekühlt und abgelassen. Der Ethylen-Enddruck beträgt 12,7 bar.
Charakteristische Daten:
Feststoffgehalt: 46,2 %
pH-Wert: 4,14
Viskosität: 11,6 Pa·s
Teilchengrößenverteilung: 100 - 2200 nm
Ethylen-Gehalt: 30,2 %
Glaspunkte: -28°C/8°C

### Beispiel 8

In einem 30 I-Druckreaktionsgefäß mit Temperaturregeleinrichtung und Rührwerk werden 10800 g Wasser, 382 g Polyvinylalkohol mit einer Viskosität einer entsprechenden 4 %igen wäßrigen Lösung bei 20 °C von ca. 18 mPa·s und einem Verseifungsgrad von ca. 88 Mol-%, 1146 g Polyvinylalkohol mit einer Viskosität einer entsprechenden 4 %igen wäßrigen Lösung bei 20 °C von ca. 8 mPa·s und einem Verseifungsgrad von ca. 88 Mol-%, 4,3 g Texapon K12, 380 g einer wäßrigen 20 %igen Lösung von Arkopal N300, 12,5 g Natriumdisulfit und 50,8 g Natriumacetat vorgelegt. Der Reaktor wird mit Stickstoff und Ethylen gespült, um den Sauerstoff weitgehend zu entfernen. Anschließend wird das Rührwerk auf 150 U/min eingestellt. Man dosiert 640 ml Vinylacetat zu und erwärmt den Kesselinhalt auf 40 °C. Bei dieser Temperatur werden schnell 250 ml der Initiator-Lösung aus 50 g Ammoniumperoxodisulfat und 1000 g Wasser zugegeben und dann die Temperatur auf 60 °C erhöht. Während der Aufheizphase wird Ethylen bis zu einem Druck von 85 bar aufgedrückt. Innerhalb von 8 h dosiert man 4000 ml Vinylacetat linear zu. Dabei wird nach 6 h Polymerisationszeit die Ethylen-Zufuhr gestoppt. Nach Ende der 8-stündigen Polymerisationsphase werden innerhalb einer Stunde weitere 1000 ml Vinylacetat linear zudosiert. Über den gesamten Zeitraum von 9 h werden parallel zur Vinylacetat-Zugabe 600 ml Initiator-Lösung linear zudosiert. Nach dem Dosierende werden die verbleibenden 150 ml Initiator-Lösung schnell zudosiert und innerhalb von 1,5 h die Manteltemperatur auf 85 °C erhöht. Bei dieser Temperatur wird eine weitere Stunde gerührt, dann der Ansatz abgekühlt und abgelassen. Der Ethylen-Enddruck beträgt 19,9 bar.
Charakteristische Daten:
Feststoffgehalt: 46,0 %
pH-Wert: 4,37
Viskosität: 4,46 Pa·s
Teilchengrößenverteilung: 100 - 2200 nm
Ethylen-Gehalt: 38,8 %
Glaspunkte: -26,6°C/10°C

### Beispiel 9

In einem 30 I-Druckreaktionsgefäß mit Temperaturregeleinrichtung und Rührwerk werden 10800 g Wasser, 565 g Polyvinylalkohol mit einer Viskosität einer entsprechenden 4 %igen wäßrigen Lösung bei 20 °C von ca. 18 mPa·s und einem Verseifungsgrad von ca. 88 Mol-%, 565 g Polyvinylalkohol mit einer Viskosität einer entsprechenden 4 %igen wäßrigen Lösung bei 20 °C von ca. 8 mPa·s und einem Verseifungsgrad von ca. 88 Mol-%, 4,3 g Texapon K12, 380 g einer wäßrigen 20 %igen Lösung von Arkopal N300, 12,5 g Natriumdisulfit und 50,8 g Natriumacetat vorgelegt. Der Reaktor wird mit Stickstoff und Ethylen gespült, um den Sauerstoff weitgehend zu entfernen. Anschließend wird das Rührwerk auf 150 U/min eingestellt. Man dosiert 640 ml Vinylacetat zu und erwärmt den Kesselinhalt auf 40 °C. Bei dieser Temperatur werden schnell 250 ml der Initiator-Lösung aus 50 g Ammoniumperoxodisulfat und 1000 g Wasser zugegeben und dann die Temperatur auf 60 °C erhöht. Während der Aufheizphase wird Ethylen bis zu einem Druck von 85 bar aufgedrückt. Innerhalb von 8 h dosiert man 4000 ml Vinylacetat linear zu. Dabei wird nach 6 h Polymerisationszeit die Ethylen-Zufuhr gestoppt. Nach Ende der 8-stündigen Polymerisationsphase werden innerhalb einer Stunde weitere 1000 ml Vinylacetat linear zudosiert. Über den gesamten Zeitraum von 9 h werden parallel zur Vinylacetat-Zugabe 600 ml Initiator-Lösung linear zudosiert. Nach dem Dosierende werden die verbleibenden 150 ml Initiator-Lösung schnell zudosiert und innerhalb von 1,5 h die Manteltemperatur auf 85 °C erhöht. Bei dieser Temperatur wird eine weitere Stunde gerührt, dann der Ansatz abgekühlt. Der Ethylen-Enddruck beträgt 17,0 bar.
Charakteristische Daten:
Feststoffgehalt: 44,1 %
pH-Wert: 4,3
Viskosität: 2,91 Pa·s
Teilchengrößenverteilung: 100 - 2200 nm
Ethylen-Gehalt: 35,5 %
Glaspunkte: -25,7°C/8°C

### Vergleichsbeispiel 1

In einem 30 I-Druckreaktionsgefäß mit Temperaturregeleinrichtung und Rührwerk wird die mit Essigsäure auf den pH-Wert von 5,0 eingestellte Lösung aus 500 g Polyvinylalkohol mit einer Viskosität der 4 %igen wäßrigen Lösung bei 20 °C von ca. 18 mPa·s und einem Verseifungsgrad von ca. 88 Mol-%, 1000 g Polyvinylalkohol mit einer Viskosität der 4 %igen wäßrigen Lösung bei 20 °C von ca. 8 mPa·s und einem Verseifungsgrad von ca. 88 Mol-%, 50,8 g wasserfreiem Natriumacetat, 12,7 g Natriumdisulfit und 8800 g Wasser gebracht. Zusätzlich wird in die Vorlage ein Emulgator Texapon K12 (21g) eingebracht.

Der Reaktor wird mit Stickstoff gespült, um weitgehend allen Sauerstoff zu entfernen. Anschließend wird das Rührwerk auf 150 U/min. eingestellt, dem Ansatz 500 ml Vinylacetat zugegeben, der Kesselinhalt auf 40 °C erwärmt, bei 40 °C werden 25 % einer Lösung von 50 g Ammoniumpersulfat in 1000 g Wasser zugeben und der Kesselinhalt auf 60 °C erwärmt. Während des Aufheizvorgangs wird kein Ethylen zugegeben.
Beim Erreichen von 60 °C Innentemperatur wird mit der einstündigen Dosierung von 1500 ml Vinylacetat bei einer Innentemperatur von 60 °C begonnen. Nach Beendigung der Dosierung wird der Ethylendruck auf 85 bar eingestellt und linear über eine Zeitdauer von 6 h wird die restliche Initiator-Lösung parallel zu 3640 ml Vinylacetat zudosiert. Nach Beendigung des Vinylacetat-Zulaufs nach 6 h wird die Ethylen-Zufuhr gestoppt und eine Stunde bei 60 °C nachreagieren lassen, dann wird der Ansatz über 60 Minuten auf 85 °C aufgeheizt und nach beendeter Reaktion nach einer weiteren Stunde abgekühlt. Der Ethylen-Enddruck beträgt 62,6 bar.
Charakteristische Daten:
Feststoffgehalt: 46 %
pH-Wert: 4,2
Viskosität: 17,5 Pa·s
Teilchengrößenverteilung: 100-1800 nm
Ethylen-Gehalt: 36,3 %
Glaspunkte: -20/26°C

### Vergleichsbeispiel 2 (analog DE-C 22 14 410)

In ein 30 I-Druckreaktionsgefäß mit Temperaturregeleinrichtung und Rührwerk wird die auf einen pH-Wert von 5,0 eingestellte Lösung aus 7 g Natriumlaurylsulfat, 500 g Polyvinylalkohol mit einer Viskosität der 4 %igen wäßrigen Lösung bei 20 °C von ca. 18 mPa·s und einem Verseifungsgrad von ca. 88 Mol-%, 319 g Polyvinylalkohol mit einer Viskosität der 4 %igen wäßrigen Lösung bei 20 °C von ca. 8 mPa·s und einem Verseifungsgrad von ca. 88 Mol-%, 15,3 g wasserfreiem Natriumacetat, 12,5 g Natriumdisulfit und 7700 g Wasser gebracht.
Der Reaktor wird mit Stickstoff und Ethylen gespült, um weitgehend allen Sauerstoff zu entfernen. Anschließend wird das Rührwerk auf 150 U/min. eingestellt, dem Ansatz 760 g Vinylacetat zugegeben, der Kesselinhalt auf 40 °C erwärmt, bei 40 °C eine Lösung von 6 g Ammoniumpersulfat in 250 g Wasser zugesetzt und der Kesselinhalt weiter auf 60 °C erwärmt. Während des Aufheizvorgangs wird Ethylen bis zu einem Druck von 50 bar zugegeben.
Beim Erreichen der Innentemperatur von 60 °C wird mit der achtstündigen Dosierung von 6880 g Vinylacetat und der Lösung von 14 g Ammoniumpersulfat in 600 g Wasser bei einer Innentemperatur von 60 °C und einem Ethylendruck von 50 bar begonnen. Nach beendeter Zudosierung wird der Ansatz mit einer Lösung von 4 g Ammoniumpersulfat in 150 g Wasser versetzt und 1,5 Std. bei einer Innentemperatur von 80 °C nachgeheizt. Anschließend wird die Ethylenzufuhr abgestellt und die Dispersion auf Zimmertemperatur abgekühlt. Der Ethylen-Enddruck beträgt 41 bar.
Charakteristische Daten:
Feststoffgehalt: 50,1 %
pH-Wert: 4,2
Viskosität: 4,0 Pa·s
Teilchengrößenverteilung: 1200 - 1500 nm
Ethylen-Gehalt: 24 %
Glaspunkt: -10°C

### B Herstellung der Dispersionspulver:

Die Versuche zur Herstellung der Dispersionspulver wurden in einem Scheibentrocknungzerstäuber (Hersteller Fa. Niro) durchgeführt.
Die Bezeichnungen für die Pulver entsprechen den Zahlen der Beispiele.
Die in den Beispielen beschriebenen Dispersionen wurden vor der Zerstäubungstrocknung mit Wasser auf einen Feststoffgehalt von 40 Gew.-% verdünnt. Die Versuche wurden unter annähernd konstanten Trocknungsbedingungen durchgeführt. Die Gaseintrittstemperaturen betrugen 110°C beziehungsweise 120 °C, die Gasaustrittstemperatur ca. 75 °C, die Zerstäuberscheibendrehzahl 23000 U/min.

Als Antibackmittel wurden für die Beispiele 1 bis 5 und die Vergleichsbeispiele 1 und 2 ein Kaolin-Derivat (China Clay-Typ) verwendet, wobei der Antibackmittel-Zusatz auf 12 Gew.-%, bezogen auf das gesamte anfallende Trockenprodukt, eingestellt wurde. Für die Beispiele 6 bis 9 wurde eine Verwachsung von Kalk und Dolomit als Antibackmittel eingesetzt, wobei der Antibackmittel-Zusatz auf 15 Gew.-%, bezogen auf das gesamte anfallende Trockenprodukt, eingestellt wurde. Die Zugabe des Antibackmittels in den Sprühtrockner erfolgte oberhalb der Zerstäuberscheibe über das Trocknungsgas. Die Resultate sind in Tabelle 1 zusammengefaßt.

**Tabelle 1**

| Pulverbezeichnung | Rieselfähigkeit | Lagerstabilität [Note] | RAS-Test [mm] | | | |
|---|---|---|---|---|---|---|
| | | | 1 h | 2 h | 4 h | 24h |
| Pulver 1 | + | 2 | 5 | 10 | 18 | 45 |
| Pulver 2 | + | 2 | 3 | 5 | 10 | 35 |
| Pulver 3 | + | 2 | 7 | 16 | 28 | 74 |
| Pulver 4 | + | 2 | 3 | 5 | 12 | 41 |
| Pulver 5 | + | 2 | 8 | 15 | 32 | 70 |
| Pulver 6 | + | 2 | 1 | 1 | 2 | 8 |
| Pulver 7 | + | 2 | 2 | 3 | 7 | 19 |
| Pulver 8 | + | 3 | 1 | 3 | 5 | 15 |
| Pulver 9 | + | 2 | 2 | 4 | 8 | 25 |
| Pulver Vergleichsbeispiel 1 | - | 4 | 90 | 110 | 130 | 136 |
| Pulver Vergleichsbeispiel 2 | + | 2 | 8 | 14 | 27 | 47 |
| Rieselfähigkeit: + Pulver rieselfähig, - Pulver nicht rieselfähig Lagerstabilität: Note 1: sehr gut, Note 5: mangelhaft RAS-Test: Angabe der Sedimenthöhe einer 0,5%igen Redispersion nach 1h, 2h, 4h und 24h (Pulver 1 bis 5 sowie Vergleichsbeispiele 1 und 2 ausgehend von 10 %iger Redispersion verdünnt, Pulver 6 bis 9 ausgehend von 45 %iger Redispersion verdünnt). | | | | | | |

### Anwendungstechnische Ausprüfung

Die Untersuchung der Flexibilität von Dichtschlämmen erfolgte in folgender Weise. Es wurde ein Premix aus 20 % Portlandzement und 80 % Quarzsand (0,1-0,4 mm Körnung) hergestellt. 75 Teile Premix wurden dann mit 25 Teilen des Dispersionspulvers trocken vorgemischt und mit ca. 27 Teilen Wasser unter einem Rührer 1 min bei hoher Schergeschwindigkeit angerührt. Dabei wurde der Wasserbedarf in Abhängigkeit vom Dispersionspulver so eingestellt, daß eine gut fließende Masse ohne Sedimentation entstand. Mit einer Schablone wurde auf einer Polyethylen-Folie ein ca. 200 cm² großer und 2 mm dicker Prüfkörper hergestellt. Anschließend wurde dieser bei Normklima (23 ± 2 °C, 50 ± 5 % rel. Luftfeuchte) mindestens eine Woche gelagert. Der Flexibilitätstest wurde dann wie folgt durchgeführt. Der Prüfkörper wurde auf eine gewünschte Temperatur abgekühlt und dann mit der glatten Seite nacheinander um Rohre von 8,2 cm, 6,2 cm, 3 cm und 2 cm Durchmesser, beginnend mit dem größten Durchmesser, gebogen. Die Rißbildung bzw. der Bruch des Prüfkörpers wurden visuell beobachtet. Dabei wurde darauf geachtet, daß die Prüfungen so schnell durchgeführt wurden, daß der Prüfkörper noch die gewünschte Temperatur hatte.

Tabelle 2 zeigt die Resultate der Flexibilitätstests.

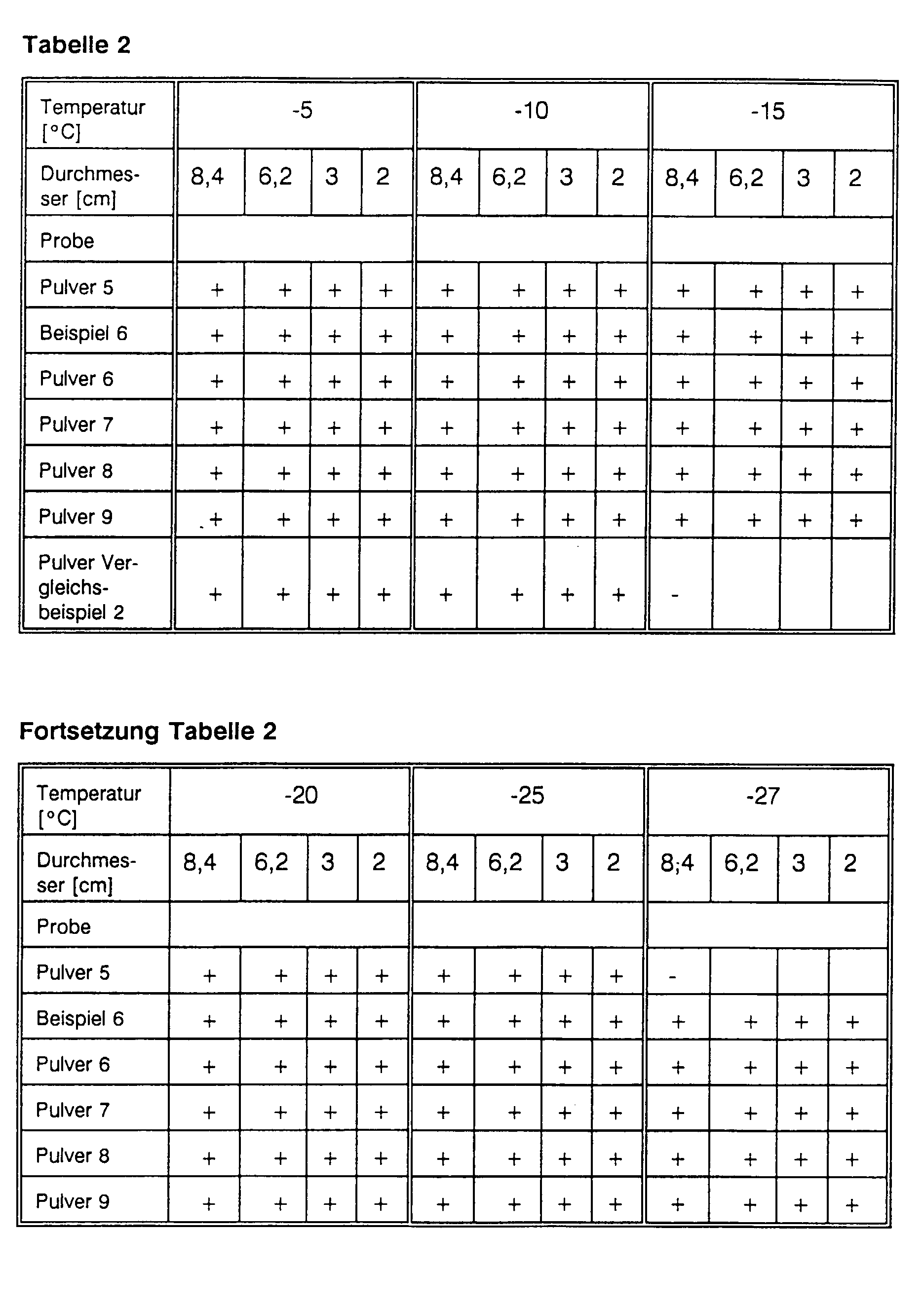

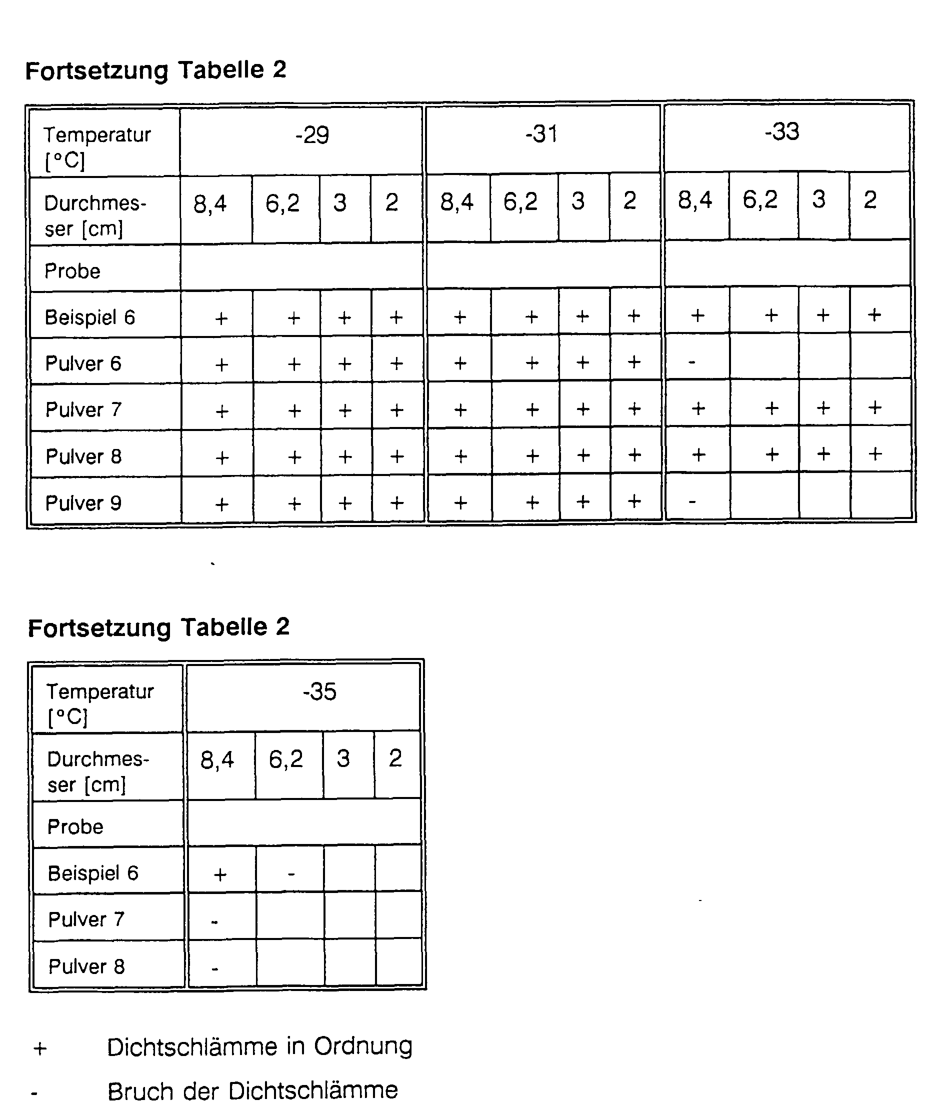

## Patentansprüche

1. Schutzkolloid-stabilisiertes Copolymerisat in Dispersions- oder redispergierbarer Pulverform mit einer Glasübergangstemperatur von -40 bis 10 °C und einem Ethylen-Gehalt von mindestens 30 Gew.-%, bezogen auf die Gesamtmenge der Monomeren, mit heterogenem Aufbau der Copolymerpartikel, enthaltend eine erste Copolymerisatphase, die Vinylacetat und > 40 Gew.-% Ethylen, bezogen auf die Gesamtmenge der Monomeren in dieser Phase, enthält, und eine letzte Copolymerisatphase, die Vinylacetat und 5 bis 40 Gew.-% Ethylen, bezogen auf die Gesamtmenge der Monomeren in dieser Phase, enthält.

2. Copolymerisat nach Anspruch 1, dadurch gekennzeichnet, daß die Glasübergangstemperatur der ersten Copolymerisatphase -30 bis -10 °C beträgt, wenn separat polymerisiert, und die Glasübergangstemperatur der letzten Copolymerisatphase 10 bis 40 °C beträgt, wenn separat polymerisiert.

3. Copolymerisat nach Anspruch 1, dadurch gekennzeichnet, daß das Copolymerisat 30 bis 70 Gew.-% Vinylacetat und 30 bis 70 Gew.-% Ethylen, bezogen auf die Gesamtmenge der eingesetzten Monomeren, enthält.

4. Copolymerisat nach Anspruch 1, dadurch gekennzeichnet, daß als Schutzkolloid Polyvinylalkohol in einer Menge von 2 bis 20 Gew.-%, bezogen auf die Gesamtmenge des Copolymerisats, enthalten ist.

5. Copolymerisat nach Anspruch 1, dadurch gekennzeichnet, daß die erste Copolymerisatphase teilkristallin ist.

6. Verfahren zur Herstellung der Copolymerisate nach Anspruch 1 durch Polymerisation von Vinylacetat und Ethylen sowie gegebenenfalls Comonomeren aus der Gruppe der Vinylester aliphatischer (C₃-C₁₈)-Carbonsäuren, Acrylsäureester, Methacrylsäureester und Maleinsäurediester aliphatischer (C₁-C₁₈)-Alkohole, Sulfonatgruppen-tragenden Monomeren, α,β-ungesättigten Carbonsäuren, Epoxy- oder Hydroxylgruppen-tragenden Methacrylsäureestern oder Acrylsäureestern oder N-Methylolgruppen tragenden Monomeren sowie weiteren damit copolymerisierbaren Monomeren, dadurch gekennzeichnet, daß in Gegenwart eines Schutzkolloids zunächst ein Teil der Monomeren unter einem Ethylendruck von 55 bis 150 bar radikalisch copolymerisiert wird und anschließend der Rest der Monomeren unter einem Ethylendruck zwischen 1 und 55 bar radikalisch copolymerisiert wird und gegebenenfalls anschließend sprühgetrocknet wird und daß der Anteil der Schutzkolloide, bezogen auf die Gesamtmenge des Copolymerisats, 2 bis 20 Gew.-%, beträgt.

7. Verfahren nach Anspruch 6, dadurch gekennzeichnet, daß die Polymerisation des ersten Teils der Monomeren unter einem Ethylendruck von 65 bis 95 bar und die des letzten Teils unter einem Ethylendruck im Bereich von 1 bis 40 bar stattfindet.

8. Verfahren nach Anspruch 6, dadurch gekennzeichnet, daß bis zu 50 Gew.-% der Monomeren mit Ausnahme von Ethylen vorgelegt werden und der Rest der Monomeren während der Polymerisation zudosiert wird.

9. Verwendung der Copolymerisate nach Anspruch 1 als Bindemittel in Baustoffen.

10. Verwendung der Copolymerisate nach Anspruch 1 als Bindemittel in Dichtschlämmen.

## Claims

1. A copolymer in dispersion or redispersible powder form which is stabilized by a protective colloid and has a glass transition temperature of -40 to 10°C and an ethylene content of at least 30% by weight, based on the total amount of monomers, with a heterogeneous build-up of the copolymer particles, comprising a first copolymer phase, which comprises vinyl acetate and > 40% by weight of ethylene, based on the total amount of monomers in this phase, and a last copolymer phase, which comprises vinyl acetate and 5 to 40% by weight of ethylene, based on the total amount of monomers in this phase.

2. A copolymer as claimed in claim 1, wherein the glass transition temperature of the first copolymer phase is -30 to -10°C when it is polymerized separately and the glass transition temperature of the last copolymer phase is 10 to 40°C when it is polymerized separately.

3. A copolymer as claimed in claim 1, wherein the copolymer comprises 30 to 70% by weight of vinyl acetate and 30 to 70% by weight of ethylene, based on the total amount of monomers employed.

4. A copolymer as claimed in claim 1, which comprises, as the protective colloid, polyvinyl alcohol in an amount of 2 to 20% by weight, based on the total amount of the copolymer.

5. A copolymer as claimed in claim 1, wherein the first copolymer phase is partly crystalline.

6. A process for the preparation of a copolymer as claimed in claim 1 by polymerization of vinyl acetate and ethylene and, if appropriate, comonomers from the group consisting of vinyl esters of aliphatic (C₃-C₁₈)carboxylic acids, acrylic acid esters, methacrylic acid esters and maleic acid diesters of aliphatic (C₁-C₁₈)alcohols, monomers which carry sulfonate groups, α,β-unsaturated carboxylic acids, methacrylic acid esters or acrylic acid esters which carry epoxide or hydroxyl groups and monomers which carry N-methylol groups and other monomers which can be copolymerized with these, which comprises first copolymerizing a portion of the monomers by free radical copolymerization under an ethylene pressure of 55 to 150 bar in the presence of a protective colloid and finally copolymerizing the remainder of the monomers by free radical copolymerization under an ethylene pressure of between 1 and 55 bar, and if appropriate then spray drying the products and wherein the proportion of protective colloids, based on the total amount of the copolymer, is 2 to 20% by weight.

7. The process as claimed in claim 6, wherein the polymerization of the first portion of the monomers takes place under an ethylene pressure of 65 to 95 bar and that of the last portion takes place under an ethylene pressure in the range from 1 to 40 bar.

8. The process as claimed in claim 6, wherein up to 50% by weight of the monomers, with the exception of ethylene, are initially introduced into the reaction vessel and the remainder of the monomers are metered in during the polymerization.

9. The use of a copolymer as claimed in claim 1 as a binder in building materials.

10. The use of a copolymer as claimed in claim 1 as a binder in sealing slurries.

## Revendications

1. Copolymère stabilisé par un colloïde protecteur sous la forme d'une poudre dispersible ou redispersible ayant une température de transition vitreuse comprise entre -40 et 10°C et une teneur en éthylène d'au moins 30% en poids, par rapport à la quantité totale des monomères, ayant une structure hétérogène des particules de copolymère, contenant une première phase polymère, qui contient plus de 40% en poids d'éthylène, par rapport à la quantité totale des monomères dans cette phase, et une autre phase de copolymère, qui contient de l'acétate de vinyle et entre 5 et 40% en poids d'éthylène, par rapport à la quantité totale des monomères dans cette phase.

2. Copolymère selon la revendication 1, caractérisé en ce que la température de transition vitreuse de la première phase de copolymère s'élève à entre -30 et -10°C, lorsqu'elle est polymérisée séparément, et en ce que la température de transition vitreuse de l'autre phase de copolymère s'élève à entre 10 et 40°C, lorsqu'elle est polymérisée séparément.

3. Copolymère selon la revendication 1, caractérisé en ce que le copolymère contient entre 30 et 70% en poids d'acétate de vinyle et entre 30 et 70% en poids d'éthylène, par rapport à la quantité totale des monomères mis en oeuvre.

4. Copolymère selon la revendication 1, caractérisé en ce qu'on utilise comme colloïde protecteur de l'alcool polyvinylique en une quantité comprise entre 2 et 20% en poids, par rapport à la quantité totale du copolymère.

5. Copolymère selon la revendication 1, caractérisé en ce que, la première phase de copolymère est partiellement cristalline.

6. Procédé de préparation de copolymères selon la revendication 1 par polymérisation d'acétate de vinyle et d'éthylène et éventuellement de comonomères choisis parmi les esters de vinyle d'acides carboxyliques aliphatiques en C₃ à C₁₈, les esters d'acide acrylique, les esters d'acide méthacrylique et les diesters d'acide maléique avec des alcools aliphatiques en C₁ à C₁₈, les monomères portant des groupes sulfonate, les acides carboxyliques α,β-insaturés, les esters d'acide méthacrylique ou les esters d'acide acrylique portant des groupes époxy ou hydroxyle ou les monomères portant des groupes N-méthylol ainsi que d'autres monomères copolymérisables avec ceux-ci, caractérisé en ce que, on réalise en présence d'un colloïde protecteur d'abord une copolymérisation radicalaire d'une partie des monomères sous une pression d'éthylène de 55 à 150 bar et on copolymérise ensuite le reste des monomères par voie radicalaire sous une pression d'éthylène comprise entre 1 et 55 bar et on sèche ensuite éventuellement par pulvérisation et en ce que la teneur en colloïde protecteur, par rapport à la quantité totale du copolymère, se monte à entre 2 et 20% en poids.

7. Procédé selon la revendication 6, caractérisé en ce que la polymérisation de la première partie des monomères est effectuée sous une pression d'éthylène de 65 à 95 bar et celle de la dernière partie sous une pression d'éthylène dans la gamme comprise entre 1 et 40 bar.

8. Procédé selon la revendication 6, caractérisé en ce qu'on introduit dans le récipient de réaction initialement jusqu'à 50 % en poids des monomères à l'exception de l'éthylène et en ce qu'on ajoute de manière dosée le reste des monomères pendant la polymérisation.

9. Utilisation des copolymères selon la revendication 1 comme liant dans des matériaux de construction.

10. Utilisation des copolymères selon la revendication 1 comme liant dans des ciments d'étanchéité.
